# EUROPEAN PATENT APPLICATION

(11) **EP 4 717 469 A1**
(43) Date of publication of application: **01.04.2026**
(21) Application number: 24203703.4
(22) Date of filing: 30.09.2024
(51) Int. Cl.: B60C 1/00, C08L 9/06, C08L 15/00

(54) **RUBBER COMPOSITION FOR PNEUMATIC TYRE AND PNEUMATIC TYRE PRODUCED THEREFROM**

(71) Applicant: Bridgestone Europe NV/SA, 1930 Zaventem (BE)
(72) Inventor: CONSIGLIO, Micol Di, 00128 Rome (IT)
(74) Representative: Marks & Clerk LLP

(57) **Abstract**

A rubber composition for a pneumatic tyre comprising a polymer having a low glass transition temperature and a blend of hydrocarbon resins and pneumatic tyre produced therefrom.

## Description

### FIELD OF THE INVENTION

The present invention is directed to a rubber composition for a pneumatic tyre, the use of the rubber composition in the manufacture of a pneumatic tyre and pneumatic tyres comprising or prepared from the rubber composition. The pneumatic tyres are suitable for passenger-type motor vehicles.

### BACKGROUND TO THE INVENTION

When designing pneumatic tyres for motor vehicles, there is a need to ensure that the tyres have properties which are suited to the intended use and that the tyres maintain these properties throughout their lifespan. It will be appreciated that different end-uses may demand different properties. There may therefore exist a need to maximise certain properties, while ensuring that others are not too greatly compromised. In other words, there may be a need to ensure a desirable balance of certain properties. In all cases, it is desirable to provide a tyre having a long lifespan that maintains its properties over that lifespan.

In recent years, tyre wear has become a particularly important topic in the tyre industry. Tyres naturally wear during use as a result of contact with the surface on which they roll, which causes portions of rubber to break off from the tyre. Wear may cause the performance of a tyre to deteriorate over time. Additionally the portions of rubber that break off can persist in the environment and may have a negative impact upon it. It is therefore desirable to provide tyres having improved wear properties, including reduced wear, while maintaining a good balance of other tyre performance properties.

The present invention aims to provide a solution to one or more of the problems identified above.

### SUMMARY OF THE INVENTION

The present invention is directed to rubber composition for pneumatic tyres comprising a dicyclopentadiene (DCPD) resin.

Viewed from a first aspect, the present invention is directed to a rubber composition for a pneumatic tyre comprising:
a first copolymer of styrene and butadiene (SBR) having a glass transition temperature (T_{g}) of from -90°C to -30°C, optionally functionalised;
optionally, a diene elastomer; and,
a resin component comprising a dicyclopentadiene (DCPD) resin, wherein the DCPD resin is present in an amount of at least 40 phr.

Viewed from a second aspect, the present invention is directed to a pneumatic tyre comprising the rubber composition of the first aspect.

Viewed from a third aspect, the present invention is directed to a pneumatic tyre prepared from the rubber composition of the first aspect.

Viewed from a fourth aspect, the present invention is directed to a use of the rubber composition of the first aspect in the manufacture of a pneumatic tyre.

Further advantageous features are defined in the dependent claims and the description below.

### BRIEF DESCRIPTION OF THE FIGURES

Figure 1 shows the glass transition temperature (T_{g}) and aromaticity of the DCPD resin of Examples 1-A to 1-E plotted together with the wear rate of a rubber compound prepared from the rubber compositions of Examples 1-A to 1-E.
Figure 2 shows the glass transition temperature (T_{g}) and aromaticity of the DCPD resin of Examples 2-A to 2-E plotted together with the wear rate of a rubber compound prepared from the rubber compositions of Examples 2-A to 2-E.

### DETAILED DESCRIPTION OF THE INVENTION

Resins are commonly incorporated into rubber compounds for pneumatic tyres. The compatibility between the resin and the elastomers in the compound (i.e. how readily and how well they mix) can impact the performance of the tyre. Improved compatibility can lead to an improvement in, for example, tyre wear. The skilled person would expect compatibility to decrease as the glass transition temperature of a resin increases. However, the present inventors have discovered that, for DCPD resins, increasing the glass transition temperature of the resin increases its compatibility with the elastomer and improves the wear properties of the resulting tyre. Additionally, the present inventors have discovered that the aromaticity of the resin can affect compatibility; namely an aromatic DCPD resin can have improved compatibility compared to a non-aromatic DCPD resin with the same glass transition temperature. Moreover, the present inventors have discovered that rubber compositions comprising DCPD resins have and improved balance between performance properties such as wet grip, dry handling, dry grip and wear compared to, for example, terpenic resins, rosinic resins, or blends of terpenic and rosinic resins. In particular, the present inventors have discovered that wear can be significantly improved by the use of DCPD resins.

According to the above, the present invention is directed to a rubber composition for a pneumatic tyre comprising:
a first copolymer of styrene and butadiene (SBR) having a glass transition temperature (T_{g}) of from -90°C to -30°C, optionally functionalised;
optionally, a diene elastomer; and,
a resin component comprising a dicyclopentadiene (DCPD) resin, wherein the DCPD resin is present in an amount of at least 40 phr.

### DCPD resin

The term "DCPD resin" refers to a polymer mainly (i.e. at least 50%) having structural units derived from dicyclopentadiene (DCPD). Examples of such DCPD resins include homopolymers of DCPD and copolymers of DCPD with additional monomers. In the present invention, the DCPD resin is preferably a homopolymer of DCPD, which may be substituted with aromatic groups, as defined by the resin's aromaticity.

DCPD resins include aromatic-modified DCPD resins as well as hydrogenated, partially hydrogenated, and non-hydrogenated resins. Aromatic modification is, for instance, by way of C9 resin oil, styrene, or alpha methyl styrene (AMS), and the like.

Hydrogenated and partially hydrogenated DCPD resins may be referred to herein with the prefix "H2" (e.g. H2/DCPD or H2/DCPD/C9). Aromatic modified resins may be referred to herein with a suffix, such as C9 for a resin modified by way of C9 resin oil (e.g. H2/DCPD/C9).

The DCPD resin may have a glass transition temperature (T_{g}) of at least 50°C, preferably from 50 to 95°C, more preferably from 55°C to 90°C, for example, 55, 60, 65, 70, 75, 80, 85, or 90°C. In certain embodiments, the DCPD resin may have a T_{g} of from 60°C to 90°C, preferably from 65°C to 90°C, for example, 65, 70, 75, 80, 85, or 90°C. In other preferred embodiments, the DCPD resin may have a T_{g} of from 55°C to 90°C, optionally from 55°C to 75°C, for example 55, 60, 65, 70, or 75°C.

The DCPD resin may have an aromaticity of from 0% to 15%, preferably from 0% to 12.5%. In certain preferred embodiments, the DCPD resin may have an aromaticity of less than 5%, preferably 0%. In other preferred embodiments, the DCPD resin may have an aromaticity of from 5% to 15%, preferably from 7.5% to 12.5%, preferably 10%.

In certain preferred embodiments, the DCPD resin may have a T_{g} of from 65°C to 90°C, optionally from 65°C to 85°C, and an aromaticity of less than 5%, preferably 0%. In other preferred embodiments, the DCPD resin may have a T_{g} of from 55°C to 90°C, optionally from 55°C to 75°C, and an aromaticity of from 7.5% to 12.5%, preferably 10%.

Wherein the DCPD resin is at least partially hydrogenated. As used herein, the term "partially hydrogenated" means that the resin component contains less than 100% olefinic protons, which may be determined by ¹H NMR spectroscopy. It is preferred that the DCPD resin is at least 80% hydrogenated. In other words, the DCPD resin may contain less than 80% olefinic protons. It is preferred that the DCPD resin is 90% hydrogenated, for example at least 95% hydrogenated or fully hydrogenated.

The present inventors have discovered that the improved wear may be provided by including a single resin in the plasticizer system. Accordingly, the rubber composition may comprise a single resin and/or may not comprise a further resin. The further resins that the rubber composition may not comprise include a terpenic resin and/or a rosinic resin. In other words, the only resin in the rubber composition may be a DCPD resin or the composition may consist of a DCPD resin.

The amount of the DCPD resin is not particularly limited and it present in an amount of from 40 to 90 phr, preferably from 45 to 70 phr, for example, 45, 50, 55, 60, 65, or 70 phr.

The DCPD resin may have a molecular weight of at least 500 Da, preferably from 625 to 950 Da, more preferably from 650 to 850 Da, for example 650, 675, 700, 725, 750,775, 800, 825, or 850 Da.

In certain preferred embodiments, the DCPD resin may have one or more of the following features: a T_{g} of from 65°C to 90°C, for example 60, 65, 70, 75, 80, 85, or 90°C; an aromaticity of less than 5%, preferably 0%; and/or a molecular weight of from 600 to 700 Da, preferably from 625 to 675 Da, for example, 625, 630, 635, 640, 645, 650, 655, 660, 665, 670, or 675 Da. These features may provide improved balance between performance properties such as wet grip, dry handling, dry grip and wear compared to, for example, terpenic resins, rosinic resins, or blends of terpenic and rosinic resins. In particular, these features may improve wear significantly.

In these embodiments, the resin component may comprise, optionally consist of, a DCPD resin that is at least partially hydrogenated, preferably at least 90% hydrogenated, has a T_{g} of from 65°C to 90°C, for example, 65, 70, 75, 80, 85, or 90°C; an aromaticity of less than 5%, preferably 0%, and a molecular weight of from 600 to 700 Da.

In other preferred embodiments, the DCPD resin may have one or more of the following features: a T_{g} of from 55°C to 90°C, for example 55, 60, 65, 70, 75, 80, 85, or 90°C; an aromaticity of from 5% to 15%, preferably from 7.5% to 12.5%, preferably 10%; and/or, a molecular weight of from 800 to 900 Da, preferably from 825 to 875 Da, for example 825, 830, 835, 840, 845, 850, 855, 860, 865, 870, or 875 Da. These features may provide improved balance between performance properties such as wet grip, dry handling, dry grip and wear compared to, for example, terpenic resins, rosinic resins, or blends of terpenic and rosinic resins. In particular, these features may improve wear significantly.

In these embodiments, the resin component may comprise, optionally consist of, a DCPD resin that is at least partially hydrogenated, preferably at least 90% hydrogenated, and modified with a C9 resin oil, has a T_{g} of from 55°C to 90°C, for example 55, 60, 65, 70, 75, 80, 85 or 90°C, an aromaticity of from 5% to 15%, preferably from 7.5% to 12.5%, preferably 10%, and a molecular weight of from 800 to 900 Da.

### Elastomers

The terms "polymer", "copolymer", "elastomer" and rubber may be used interchangeably herein to describe the polymeric base material for the rubber compositions. These elastomers may be, for example, natural rubber, polybutadiene, synthetic polyisoprenes, butadiene copolymers, isoprene copolymers and mixtures thereof. The components of the rubber compositions are provided in parts per hundred rubber (phr), which means parts by weight per hundred parts of elastomer (or of the total elastomers if several elastomers are present). The term "rubber composition" may be used interchangeably with the term "rubber compound".

The first copolymer of styrene and butadiene (abbreviated as first SBR) may be an emulsion SBR or E-SBR (i.e. an SBR prepared by emulsion polymerization) or a solution SBR or S-SBR (i.e. an SBR prepared by solution polymerization). Preferably the first SBR is a solution SBR or S-SBR. The present inventors have discovered that the DCPD resins generally have a higher compatibility with S-SBR polymers compared with E-SBR polymers.

According to the above, the first SBR may be a solution-SBR. The first S-SBR has a T_{g} of from -90°C to -30°C, preferably from -65°C to -30°C, for example -65, -60, -55, - 50, -45, -40, -35, or-30°C.

The first SBR may be functionalised with one or more functional groups selected from the group consisting of silane, alkoxysilane, aminosilane, silane-containing carboxyl, and silanol groups. Preferably, the first SBR is functionalised with one or more silane-containing carboxyl groups, preferably silane-containing carboxyl groups having the Formula (I): 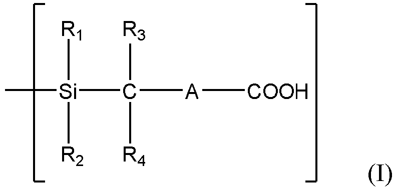 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkylene radical; one or more heteroatoms selected from the group consisting of O, NR₇, S and SiR₈R₉; or, an alkylene radical containing one or more heteroatoms, preferably wherein the heteroatoms are one or more selected from the group consisting of O, NR₇, S, and SiR₈R₉.

In Formula (I), R₁ and R₂ may each independently be a hydrogen, C₁ to C₁₂ linear or branched alkyl, C₂ to C₁₂ linear or branched alkenyl, C₁ to C₁₂ linear or branched alkoxy, C₃ to C₁₂ cycloalkyl, C₂ to C₁₂ cycloalkoxy, C₆ to C₁₂ aryl, C₆ to C₁₂ aryloxy, C₇ to C₁₄ arylalkyl, C₇ to C₁₄ alkylaryl, C₆ to C₂₄ alkylaryloxy, C₅ to C₂₄ aralkyl, or a C₆ to C₂₄ aralkoxy radical. Preferably, R₁ and R₂ may each independently be a C₁ to C₆ linear or branched alkyl, C₂ to C₆ linear or branched alkenyl, C₁ to C₆ linear or branched alkoxy, C₃ to C₁₂ cycloalkyl, C₂ to C₁₂ cycloalkoxy, or a C₆ to C₁₂ aryl radical. Preferably, R₁ and R₂ may each independently be a C₁ to C₆ linear or branched alkyl, C₂ to C₆ linear or branched alkenyl, C₁ to C₆ linear or branched alkoxy, or a C₆ to C₁₂ aryl radical. Preferably, R₁ and R₂ may each independently be a C₁ to C₃ linear or branched alkyl, C₂ to C₃ linear or branched alkenyl, C₁ to C₃ linear or branched alkoxy, or a C₆ aryl radical. For example, R₁ and R₂ may each independently be a methyl, tert-butyl, prop-1-enyl, ethoxy, or phenyl radical. More preferably, R₁ and R₂ are methyl radicals.

R₃ and R₄ may each independently be a hydrogen, C₁ to C₁₂ linear or branched alkyl, C₃ to C₁₂ cycloalkyl, C₆ to C₁₂ aryl, C₅ to C₂₄ aralkyl, or a C₅ to C₂₄ alkaryl radical. Preferably R₃ and R₄ may each independently be a hydrogen, C₁ to C₆ linear or branched alkyl, C₂ to C₆ linear or branched alkenyl, C₁ to C₆ linear or branched alkoxy, or a C₆ to C₁₂ aryl radical. More preferably, R₃ and R₄ may each independently be a hydrogen or methyl radical. In a particular embodiment, R₃/R₄ and "A" together form a C₆ aryl.

"A" may independently be a substituted or unsubstituted C₁ to C₆ linear alkyl radical; one or more heteroatoms selected from the group consisting of O, NR₇, S and SiR₈R₉; or, a substituted or unsubstituted C₁ to C₆ linear alkyl radical containing one or more heteroatoms selected from the group consisting of O, NR₇, S, and SiR₈R₉. Preferably, "A" may independently be a substituted or unsubstituted C₁ to C₃ linear alkyl radical; one or more heteroatoms selected from the group consisting of O, NR₇, S and SiR₈R₉; or, a substituted or unsubstituted C₁ to C₃ linear alkyl radical containing one or more heteroatoms selected from the group consisting of O, NR₇, S, and SiR₈R₉. Where "A" is substituted, it may be substituted with one or more selected from the group consisting of a C₁ to C₆ linear alkyl radical, and a C₆ to C₁₂ aryl radical. Preferably, "A" may be substituted with a C₁ to C₃ linear alkyl radical or a C₆ aryl radical. More preferably, "A" may be substituted with a C₁ radical. R₇ may be hydrogen, C₁ to C₆ linear alkyl, for example methyl, or trimethylsilyl. R₈ and R₉ may independently be C₁ to C₆ linear alkyl, for example methyl. Preferably, A is a C₂ alkyl radical containing an S atom. The structure of "A" as a C₂ alkyl radical containing an S atom is presented below.

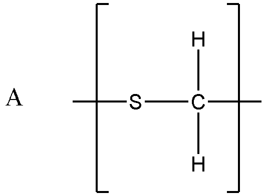

The silane-containing carboxyl groups may be present as a carboxylate of the Formula (II): 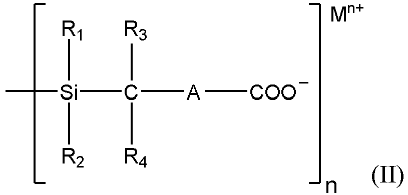 wherein:
R₁ and R₂ are as defined above for Formula (I);
R₃ and R₄ are as defined above for Formula (I);
A is as defined above for Formula (I);
M is a metal or semi-metal of valency 1 to 4, for example, Li, Na, K, Mg, Ca, Zn, Fe, Co, Ni, Al, Nd, Ti, Sn, Si, Zr, V, Mo or W; and
n is an integer from 1 to 4.

In the compounds of Formula (II), M may be Li and n may be 1.

The further definitions of R₁, R₂, R₃, R₄, R₇, R₈ and R₉ in Formula (II) are the same as those above for Formula (I).

The functionalised first SBR may be obtainable by reaction of the SBR copolymer with one or more functionalising reagents in the form of silalactones. The silalactones may be compounds of the Formula (III): 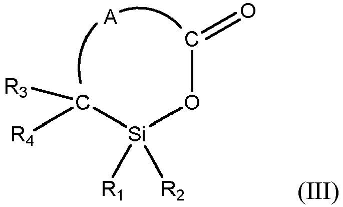 wherein
R₁ and R₂ are as defined above for Formula (I);
R₃ and R₄ are as defined above for Formula (I); and,
A is as defined above for Formula (I).

The further definitions of R₁, R₂, R₃, R₄, R₇, R₈ and R₉ in Formula (III) are as described above for Formula (I).

Advantageously, the silalactones of Formula (III) may be one or more selected from the group consisting of 2,2-dimethyl-1-oxa-2-silacyclohexan-6-one, 2,2,4-trimethyl-1-oxa-2-silacyclohexan-6-one, 2,2,5-trimethyl-1-oxa-2-silacyclohexan-6-one, 2,2,4,5-tetramethyl-1-oxa-2-silacyclohexan-6-one, 2,2-diethyl-1-oxa-2-silacyclohexan-8-one, 2,2-diethoxy-1-oxa-2-silacyclohexan-6-one, 2,2-dimethyl-1,4-dioxa-2-silacyclohexan-6-one, 2,2,5-trimethyl-1,4-dioxa-2-silacyclohexan-6-one, 2,2,3,3-tetramethyl-1,4-dioxa-2-silacyclohexan-6-one, 2,2-dimethyl-1-oxa-4-thia-2-silacyclohexan-6-one, 2,2-diethyl-1-oxa-4-thia-2-silacyclohexan-6-one, 2,2-diphenyl-1-oxa-4-thia-2-silacyclonexan-6-one, 2-methyl-2-ethenyl-1-oxa-4-thia-2-silacyclohexan-6-one, 2,2,5-trimethyl-1-oxa-4-thia-2-silacyclohexan-6-one, 2,2-dimethyl-1-oxa-4-aza-2-silacyclohexan-6-one, 2,2,4-trimethyl-1-oxa-4-aza-2-silacyclohexan-6-one, 2,4-dimethyl-2-phenyl-1-oxa-4-aza-2-silacyclohexan-6-one, 2,2-dimethyl-4-trimethylsilyl-1-oxa-4-aza-2-silacyclohexan-8-one, 2,2-diethoxy-4-methyl-1-oxa-4-aza-2-silacyclohexan-6-one, 2,2,4,4-tetramethyl-1-oxa-2,4-disilacyclohexan-8-one, 3,4-dihydro-3,3-dimethyl-1H-2,3-benzoxasilin-1-one, 2,2-dimethyl-1-oxa-2-silacyclopentan-5-one, 2,2,3-trimethyl-1-oxa-2-silacyclopenten-5-one, 2,2-dimethyl-4-phenyl-1-oxa-2-silacyclopentan-5-one, 2,2,4-(tert-butyl)-1-oxa-2-silacyclopentan-5-one, 2-methyl-2-(2-propen-1-yl)-1-oxa-2-silacyclopentan-5-one, 1,1-dimethyl-2,1-benzoxasilol-3(1H)-one, 2,2-dimethyl-1-oxa-2-silacycloheptan-7-one. Preferably, the silalactone of Formula (III) is 2,2-dimethyl-1-oxa-4-thia-2-silacyclohexan-6-one. The structure of 2,2-dimethyl-1-oxa-4-thia-2-silacyclohexan-6-one is presented below.

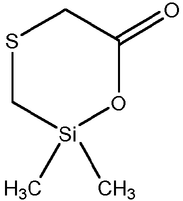

The silane-containing carboxyl group may be bonded to the SBR copolymer via one or more divalent structural elements of the Formula (V): 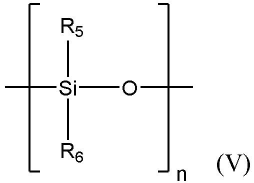 wherein
n is an integer from 3 to 6;
R₅, R₆ are the same or different and are each independently a hydrogen, alkyl, cycloalkyl, aryl, alkaryl, or aralkyl radical;
which may contain one or more heteroatoms, preferably wherein the heteroatoms are one or more selected from the group consisting of O, N, S or Si.

When the divalent structural element is present, the SBR copolymer is bonded at the silicon end of the divalent structural element according to the below:

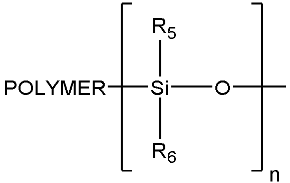

The silane-containing carboxyl group of Formula (I) or (II) is bonded at the oxygen end of the divalent structural element of Formula (V), when the divalent structural element is present.

The divalent structural elements of the Formula (V) may be derived from cyclosiloxanes, such as cyclosiloxanes of the Formula (IV): 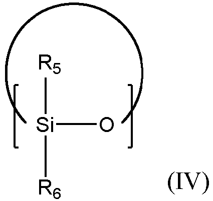 wherein
n is as defined above for Formula (V);
R₅, R₆ are as defined above for Formula (V).

R₅ and R₆ may each independently a hydrogen, C₁ to C₁₂ linear or branched alkyl, C₃ to C₁₂ cycloalkyl, C₆ to C₁₂ aryl, C₇ to C₁₄ aralkyl, or a C₇ to C₁₄ alkaryl radical. Preferably, R₅ and R₆ may each independently be a C₁ to C₆ linear or branched alkyl, preferably, C₁ to C₃ linear alkyl, more preferably a methyl radical.

The divalent structural elements of the Formula (V) may be derived from one or more selected from the group consisting of hexamethylcyclotrisiloxane, octamethylcyclotetrasiloxane, decamethylcyclopentasiloxane and dodecamethylcyclohexasiloxane. Preferably, the divalent structural element is derived from hexamethylcyclotrisiloxane.

In a preferred embodiment, R₁ and R₂ may each independently be a methyl, tert-butyl, prop-1-enyl, ethoxy, or phenyl radical, R₃ and R₄ may each independently be a hydrogen or methyl radical, A is a C₂ alkyl radical containing an S atom, which is bonded to the copolymer by the divalent structural element according to Formula (V), wherein R₅ and R₆ are C₁ to C₃ linear alkyl radicals and n is 3.

It is particularly advantageous for the SBR copolymer to be terminated with carboxyl groups derived from 2,2-dimethyl-1-oxa-4-thia-2-silacyclohexan-6-one that is bonded to the polymer via a divalent structural element derived from hexamethylcyclotrisiloxane. In this embodiment, the silane-containing carboxyl group of Formula (I) (having R₁, R₂, R₃ and R₄ as methyl radicals and "A" as the C₂ alkyl radical containing an S atom shown above) is bonded to the copolymer by the divalent structural element according to Formula (V), wherein R₅ and R₆ are methyl radicals and n is 3.

The synthesis of SBR copolymers terminated with silane-containing carboxyl groups and the compounds of Formulae (I) to (V) above is discussed in detail in, for example, International patent application number WO 2014/173706 A1.

The amount of the first SBR is not particularly limited and it may be present in an amount of at least 30 phr, preferably from 35 to 80 phr, more preferably from 40 to 70 phr, for example 40,45, 50, 55, 60, 65 or 70 phr.

It is preferred that the rubber composition further comprises a diene elastomer. The diene elastomer may be one or more selected from the group consisting of natural rubber, polybutadiene rubber, synthetic polyisoprene, butadiene copolymers, isoprene copolymers and mixtures thereof, preferably a second copolymer of styrene and butadiene (SBR). More preferably the rubber composition further comprises a second solution-SBR or a polybutadiene rubber.

The second solution SBR may have a T_{g} of from -80°C to -10°C, preferably from -50°C to -20°C, for example -50, -45, -40, -35, -30, -25, or -20°C. If the rubber composition comprises the second SBR and another diene elastomer, for example, a polybutadiene rubber, the second SBR may be referred to as the first SBR.

In preferred embodiments the second SBR is functionalised with one or more alkoxysilane groups. The term alkoxysilane refers to functional groups having the general formula -SiOR, wherein R can be a hydrogen or a hydrocarbyl radical preferably comprising from 1 to 4 carbon atoms, in particular a methyl or an ethyl. This -SiOR functional group can be located at an end of the elastomer chain, inside the elastomer chain or also as a pendant group along the elastomer chain. In the case where there are several -SiOR functional groups borne by the polymer, they can occupy one or other of the configurations. Preferably the -SiOR functional groups are methoxysilane or ethoxysilane, more preferably ethoxysilane.

The polybutadiene rubber is not particularly limited and may be any of those known to the skilled person. The polybutadiene rubber may have a T_{g} of from -130°C to -80°C, preferably from -115°C to -95°C, for example -115, -110, -105, -100, or -95°C. The polybutadiene rubber may be a high *cis* polybutadiene rubber, for example having a *cis* isomer content of at least 90%, preferably at least 95% by weight of the polybutadiene rubber.

### Additional components

In addition to the components described above, the rubber compositions may comprise additional components that the skilled person would include in order to prepare rubber compositions that are suitable for the preparation of pneumatic tyres. These include, for example, liquid plasticizers, vulcanising agents (such as sulphur), vulcanisation accelerators, vulcanisation accelerator auxiliaries, silane coupling agents, anti-degradation agents (such as antioxidants or anti-ozonants), waxes, and processing agents.

### Particularly preferred embodiments

In one particularly preferred embodiment, the rubber composition comprises:
a first copolymer of styrene and butadiene (SBR) having a glass transition temperature (T_{g}) of from -90°C to -30°C, optionally functionalised with silane-containing carboxyl groups having the Formula (I);
a second solution-SBR optionally functionalised with one or more alkoxysilane groups, preferably methoxysilane or ethoxysilane, more preferably ethoxysilane; or, a polybutadiene rubber; and,
wherein the DCPD resin has one or more, preferably all, of the following features: a T_{g} of from 65°C to 90°C; an aromaticity of less than 5%, preferably 0%; and/or a molecular weight of from 600 to 700 Da, preferably from 625 to 675 Da.

In one particularly preferred embodiment, the rubber composition comprises:
a first copolymer of styrene and butadiene (SBR) having a glass transition temperature (T_{g}) of from -90°C to -30°C, optionally functionalised with one or more alkoxysilane groups, preferably methoxysilane or ethoxysilane, more preferably ethoxysilane; or, silane-containing carboxyl groups having the Formula (I);
a polybutadiene rubber; and,
wherein the DCPD resin has one or more, preferably all, of the following features: a T_{g} of from 65°C to 90°C; an aromaticity of less than 5%, preferably 0%; and/or a molecular weight of from 600 to 700 Da, preferably from 625 to 675 Da.

In one particularly preferred embodiment, the rubber composition comprises:
a first copolymer of styrene and butadiene (SBR) having a glass transition temperature (T_{g}) of from -90°C to -30°C, optionally functionalised with silane-containing carboxyl groups having the Formula (I);
a second solution-SBR optionally functionalised with one or more alkoxysilane groups, preferably methoxysilane or ethoxysilane, more preferably ethoxysilane; or, a polybutadiene rubber; and,
wherein the DCPD resin has one or more, preferably all, of the following features: a T_{g} of from 55°C to 90°C; an aromaticity of from 5% to 15%, preferably from 7.5% to 12.5%, more preferably 10%; and/or, a molecular weight of from 800 to 900 Da, preferably from 825 to 875 Da.

In one particularly preferred embodiment, the rubber composition comprises:
a first copolymer of styrene and butadiene (SBR) having a glass transition temperature (T_{g}) of from -90°C to -30°C, optionally functionalised with one or more alkoxysilane groups, preferably methoxysilane or ethoxysilane, more preferably ethoxysilane; or, with silane-containing carboxyl groups having the Formula (I);
a polybutadiene rubber; and,
wherein the DCPD resin has one or more, preferably all, of the following features: a T_{g} of from 55°C to 90°C; an aromaticity of from 7.5% to 12.5%, preferably 10%; and/or, a molecular weight of from 800 to 900 Da, preferably from 825 to 875 Da.

### Method of preparation

In preparing the rubber composition of the present invention, the method for combining each of the components is not limited and any of the methods known to the person skilled in the art may be used. For example, all of the component materials may be blended and kneaded at once or they may be blended and kneaded in multiple steps. For blending and kneading, a kneader such as roll kneader, internal mixer, or Banbury mixer may be used. For moulding the rubber composition into sheet or strip shape, any known moulding machine such as extrusion moulding machine or press moulding machine may be used. The vulcanization conditions for hardening the above rubber composition are not limited and can be any of those known to the person skilled in the art. Typically, however, vulcanization conditions of treatment at 140 to 180° C for 5 to 120 minutes are employed.

### Pneumatic tyres

In a further aspect, the present invention is directed to pneumatic tyres. The pneumatic tyres are not particularly limited and may be any tyres used on passenger vehicles such as cars, motorbikes, and commercial goods vehicles, for example. The pneumatic tyres may be suited to any type of climate, weather or road conditions and may be, for example, a summer tyre, a winter tyre, a snow tyre, an all-season tyre, a sports tyre, or a high performance tyre.

In view of the above, the present invention is directed to a pneumatic tyre comprising the rubber composition of the present invention and/or a pneumatic tyre prepared from the rubber composition of the present invention.

In a further aspect, the present invention is directed to the use of the rubber composition in the manufacture of a pneumatic tyre.

The part of the tyre in which the rubber composition of the present invention is used is not limited and may be appropriately selected depending on the intended purpose. For example, the rubber composition may be used in the tread, base treads, side walls, side-reinforcing rubbers, bead fillers, etc. Among these, the rubber composition is advantageously used in the tread component.

Regarding the method for producing the tyre, any method known to those skilled in the art can be used. For example, components generally used in tyre production, such as a carcass layer, a belt layer, a tread layer and the like formed of at least one selected from the group consisting of an unvulcanised rubber composition and a cord are layered in order on a drum for tyre formation and then the drum is removed to give a green tyre. Next, the green tyre is vulcanised under heat according to an ordinary method to produce a desired tyre.

The present invention will now be described by the following non-limiting examples.

### EXAMPLES

### Methods of measurement

### Glass transition temperature (T_{g})

Glass transition temperatures (T_{g}) were measured by DSC (Differential Scanning Calorimetry) according to standard ASTM D3418 (1999).

### Aromaticity

Aromaticity values defined herein are measured by ¹H NMR as the percentage content of aromatic protons having a chemical shift from 6.5 to 8.5 ppm.

### Molecular weight

Molecular weight was determined by gel permeation chromatography using a known molecular weight marker.

### Cetyltrimethylammonium bromide (CTAB) adsorption method

The surface area of the fillers was measured by the CTAB method according to ASTM D6845.

### Loss Factor (tan δ)

The loss factor (tangent δ, or tan δ) at different temperatures is used to evaluate rolling resistance and wet grip. The average tan δ at lower temperatures (e.g. 0-30°C) is an indicator of wet grip. Tan δ at moderate temperatures (e.g. 30°C) is an indicator of dry grip. Tan δ at 60°C is an indicator of rolling resistance (RR). Dynamic physical testing to determine tan δ was conducted in accordance with the ISO 4664 standard.

### Elastic Modulus (E)

The Elastic Modulus (E') is used to evaluate grip performance. Dynamic physical testing to determine E' at 30°C, which is an indicator of Dry handling (Dry-H) was conducted in accordance with the ISO 4664 standard.

### Mass loss/Wear (abrasion resistance)

Abrasion resistance is determined by the weight or volume loss of a vulcanized compound as a consequence of its contact with an abrasive roller that is rotated under fixed load in accordance with ISO 4649.

All components are commercially available unless otherwise described.

### DCPD Resins

Table 1 below describes the physical characteristics of the resins used in the following examples.

**Table 1**

| **Resin** | **MW (Da)** | **T_{g} (°C)** | **Aromaticity (%)** |
|---|---|---|---|
| Rosinic | 1100 | 49 | 6.5 |
| Terpenic | 1010 | 67 | 1 |
| H₂/DPCD A | 650 | 80 | 0 |
| H₂/DPCD B | 650 | 70 | 0 |
| H₂/DPCD C | 600 | 60 | 0 |
| H₂/DPCD/C9 A | 850 | 60 | 10 |
| H₂/DPCD/C9 B | 850 | 70 | 10 |

| | | | |
|---|---|---|---|
| H₂/DPCD = Hydrogenated dicyclopentadiene resin. H2/DPCD/C9 = Aromatically-modified hydrogenated dicyclopentadiene resin. | | | |

### Example 1

Tyre compounds were prepared according to the following general method. The components in Table 2 were compounded in the amounts recited together with other additives including suitable plasticizers, cross-linking agents and accelerators. In preparing the rubber compositions, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer, or Banbury mixer may be used. For moulding the rubber composition into sheet or strip shape, any known moulding machine such as extrusion moulding machine or press moulding machine may be used. The values in Table 2 are all expressed in phr.

**Table 2**

| **Component** | **Comp. Ex. 1** | **Ex. 1-A** | **Ex. 1-B** | **Ex. 1-C** | **Ex. 1-D** | **Ex. 1-E** |
|---|---|---|---|---|---|---|
| S-SBR (1) | 50 | 50 | 50 | 50 | 50 | 50 |
| S-SBR (2) | 50 | 50 | 50 | 50 | 50 | 50 |
| Silica (3) | 90 | 90 | 90 | 90 | 90 | 90 |
| Terpenic resin (4) | 47 | | | | | |
| H₂/DPCD A | | 47 | | | | |
| H₂/DPCD B | | | 47 | | | |
| H₂/DPCD C | | | | 47 | | |
| H₂/DPCD/C9 A | | | | | 47 | |
| H₂/DPCD/C9 B | | | | | | 47 |

| | | | | | | |
|---|---|---|---|---|---|---|
| (1) S-SBR having a T_{g} of-35°C, a styrene content of 35% by weight of the S-SBR and a vinyl content of 26% by weight of the S-SBR functionalised according to Formula (1). (2) S-SBR having a T_{g} of -59°C, a styrene content of 11% by weight of the S-SBR and a vinyl content of 32% by weight of the S-SBR, functionalised with ethoxysilane. (3) STD Silica: Standard silica characterised by CTAB = 154-180 m²/g; NSA = 160-200 m²/g (Evonik Ultrasil VN3) (4) Terpenic resin: Tg 66°C, MW 1010 Da, softening point 115°C, aromaticity 1 (Kraton Sylvatraxx 8115) | | | | | | |

Table 3 shows measurements of various mechanical properties performed on test pieces of tyre tread prepared using the compositions of Table 2, which are normalised in Table 4.

**Table 3**

| | **Comp. Ex. 1** | **Ex. 1-A** | **Ex. 1-B** | **Ex.1-C** | **Ex. 1-D** | **Ex. 1-E** |
|---|---|---|---|---|---|---|
| **Tan*δ*(0°C)** | 1.02 | 1.03 | 0.993 | 0.992 | 1.02 | 1.07 |
| **Tan*δ*(30°C)** | 0.401 | 0.524 | 0.480 | 0.401 | 0.430 | 0.449 |
| **Av. Tan*δ*(0°C-30°C)** | 0.709 | 0.777 | 0.737 | 0.696 | 0.725 | 0.757 |
| **Tan*δ*(60°C)** | 0.184 | 0.195 | 0.190 | 0.164 | 0.167 | 0.169 |
| **E' (30°C) MPa** | 7.07 | 9.83 | 10.6 | 8.92 | 9.16 | 8.11 |
| **Mass Loss (mg)** | 126 | 101 | 99 | 110 | 100 | 94 |

**Table 4**

| **Predictor** | **Comp. Ex. 1** | **Ex. 1-A** | **Ex. 1-B** | **Ex. 1-C** | **Ex. 1-D** | **Ex. 1-E** |
|---|---|---|---|---|---|---|
| Wet grip | 100 | 102 | 101 | 100 | 101 | 102 |
| Dry-H | 100 | 106 | 107 | 104 | 104 | 102 |
| Dry grip | 100 | 106 | 105 | 101 | 103 | 103 |
| Wear | 100 | 125 | 127 | 115 | 126 | 124 |
| Balance | 400 | 439 | 440 | 420 | 434 | 431 |

All the examples comprising a DCPD resin showed an improved balance between the tyre performance indicators when compared to a comparative compound comprising a terpenic resin alone.

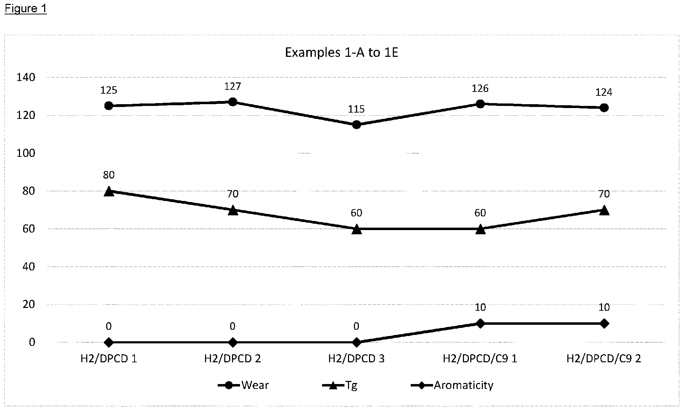

With respect to wear, the examples comprising a DCPD resin all showed improved wear performance compared to a comparative compound comprising a terpenic resin alone. The data in Table 4 show that lowering the T_{g} of the DPCD resin generally has a negative impact on wear performance, although increasing the aromaticity of the DPCD resin can improve wear performance for the same T_{g} (see Figure 1). Resins having a higher molecular weight (and thus a higher T_{g}) are usually less compatible with polymers due to their higher rigidity. A higher molecular weight (and thus a higher T_{g}) resin would be expected to reduce wear performance. The present inventors have unexpectedly discovered that the opposite is true for DPCD resins, i.e. higher molecular weight (and thus a higher T_{g}) resins increase wear performance (see Examples 1-A to 1-C). It has also been unexpectedly shown that increasing the aromaticity of the resin can improve wear for the same T_{g} value (see Example 1-D).

### Example 2

Tyre compounds were prepared according to the following general method. The components in Table 5 were compounded in the amounts recited together with other additives including suitable plasticizers, cross-linking agents and accelerators. In preparing the rubber compositions, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer, or Banbury mixer may be used. For moulding the rubber composition into sheet or strip shape, any known moulding machine such as extrusion moulding machine or press moulding machine may be used. The values in Table 5 are all expressed in phr.

**Table 5**

| **Component** | **Comp. Ex. 2** | **Ex. 2-A** | **Ex. 2-B** | **Ex. 2-C** | **Ex. 2-D** | **Ex. 2-E** |
|---|---|---|---|---|---|---|
| Polybutadiene (1) | 42 | 42 | 42 | 42 | 42 | 42 |
| S-SBR (2) | 58 | 58 | 58 | 58 | 58 | 58 |
| STD Silica (3) | 122 | 122 | 122 | 122 | 122 | 122 |
| Terpenic:Rosinic (27:24) (4):(5) | 51 | | | | | |
| Terpenic (4) | | | | | | |
| Rosinic (5) | | | | | | |
| H₂/DPCD A | | 51 | | | | |
| H₂/DPCD B | | | 51 | | | |
| H₂/DPCD C | | | | 51 | | |
| H₂/DPCD/C9 A | | | | | 51 | |
| H₂/DPCD/C9 B | | | | | | 51 |

| | | | | | | |
|---|---|---|---|---|---|---|
| (1) Polybutadiene rubber high cis, having T_{g} of-105 C, (2) S-SBR having a T_{g} of -59°C, a styrene content of 9% by weight of the S-SBR and a vinyl content of 30% by weight of the S-SBR, functionalised with ethoxysilane. (3) STD Silica CTAB = 167 m²/g; NSA = 180 m²/g, spec. gravity = 1.95 Supplier: Evonik (4) Terpenic resin having a T_{g} 66°C, MW 1010 Da, softening point 115°C, aromaticity 1 (Kraton Sylvatraxx 8115) (5) Rosinic resin having a T_{g} of 49°C (Kraton Silvatraxx 2097) | | | | | | |

Table 6 shows measurements of various mechanical properties performed on test pieces of tyre tread prepared using the compositions of Table 5, which are normalised in Table 7.

**Table 6**

| | **Comp. Ex. 2** | **Ex. 2-A** | **Ex. 2-B** | **Ex. 2-C** | **Ex. 2-D** | **Ex. 2-E** |
|---|---|---|---|---|---|---|
| **Tan*δ*(0°C)** | 0.498 | 0.532 | 0.488 | 0.441 | 0.475 | 0.508 |
| **Tan*δ*(30°C)** | 0.286 | 0.281 | 0.262 | 0.240 | 0.247 | 0.267 |
| **Tan*δ*(60°C)** | 0.198 | 0.189 | 0.182 | 0.178 | 0.176 | 0.187 |
| **Av. Tan*δ*(0°C-30°C)** | 0.392 | 0.407 | 0.375 | 0.340 | 0.361 | 0.388 |
| **E' (30°C) MPa** | 6.59 | 7.67 | 6.92 | 6.44 | 6.81 | 7.95 |
| **Mass Loss (mg)** | 98.3 | 65.3 | 86.1 | 85.6 | 75.3 | 72.3 |

**Table 7**

| **Predictor** | **Comp. Ex. 2-A** | **Ex. 2-A** | **Ex. 2-B** | **Ex. 2-C** | **Ex. 2-D** | **Ex. 2-E** |
|---|---|---|---|---|---|---|
| Wet grip | 100 | 102 | 99 | 97 | 99 | 100 |
| Dry-H | 100 | 103 | 101 | 100 | 101 | 103 |
| Dry-grip | 100 | 101 | 99 | 97 | 98 | 100 |
| Wear | 100 | 162 | 127 | 111 | 135 | 142 |
| Balance | 400 | 468 | 426 | 405 | 433 | 445 |

All the examples comprising a DCPD resin showed an improved balance between the tyre performance values measured when compared to a comparative compound comprising a terpenic resin alone.

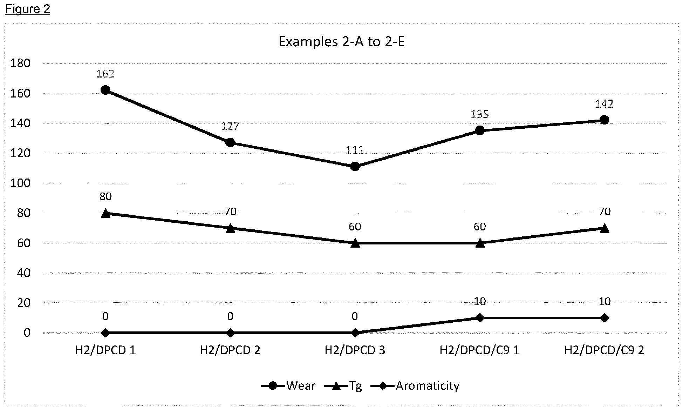

With respect to wear, the examples according to the invention also all showed improved wear performance compared to a compound comprising a blend of terpenic and rosinic resins. The data in Table 7 support the unexpected discovered by the present inventors that, for DCPD resins, higher molecular weight (and thus a higher T_{g}) resins increase wear performance (see Examples 2-A to 2-C) and that increasing the aromaticity of the resin improves wear performance for the same T_{g} (see Examples 2-D and 2-E). These data are illustrated in Figure 2.

## Claims

1. A rubber composition for a pneumatic tyre comprising:
a first copolymer of styrene and butadiene (SBR) having a glass transition temperature (T_{g}) of from -90°C to -30°C, optionally functionalised;
optionally, a diene elastomer; and,
a resin component comprising a dicyclopentadiene (DCPD) resin, wherein the DCPD resin is present in an amount of at least 40 phr.

2. The rubber composition according to claim 1, wherein the DCPD resin has a glass transition temperature (T_{g}) of at least 50°C, preferably from 55°C to 90°C.

3. The rubber composition according to claim 1 or claim 2, wherein the DCPD resin has an aromaticity of from 0% to 15%, preferably from 0% to 12.5%.

4. The rubber composition according to any one of the preceding claims, wherein the DCPD resin has an aromaticity of less than 5%, preferably 0%; or, wherein the DCPD resin has an aromaticity of from 5 to 15%, preferably from 7.5% to 12.5%, more preferably 10%.

5. The rubber composition according to any one of the preceding claims, wherein the DCPD resin is at least partially hydrogenated, preferably the DCPD resin is at least 90% hydrogenated, more preferably at least 95% hydrogenated.

6. The rubber composition according to any one of the preceding claims, wherein the DCPD resin is present in an amount of from 40 to 90 phr, preferably from 45 to 70 phr.

7. The rubber composition according to any one of the preceding claims, wherein the DCPD resin has a molecular weight of at least 500 Da, preferably from 625 to 950 Da, more preferably from 650 to 850 Da.

8. The rubber composition according to any one of the preceding claims, wherein the DCPD resin has one or more of the following features: a T_{g} of from 65°C to 90°C; an aromaticity of less than 5%, preferably 0%; and/or a molecular weight of from 600 to 700 Da, preferably from 625 to 675 Da.

9. The rubber composition according to any one of the preceding claims, wherein the DCPD resin has a T_{g} of from 65°C to 90°C, and an aromaticity of less than 5%, preferably 0%.

10. The rubber composition according to any one of claims 1 to 7, wherein the DCPD resin has one or more of the following features: a T_{g} of from 55°C to 90°C; an aromaticity of from 5% to 15%, preferably from 7.5% to 12.5%, preferably 10%; and/or, a molecular weight of from 800 to 900 Da, preferably from 825 to 875 Da.

11. The rubber composition according to claim 10, wherein the DCPD resin has a T_{g} of from 55°C to 90°C, and an aromaticity of from 7.5% to 12.5%, preferably 10%.

12. The rubber composition according to any one of the preceding claims, wherein the first SBR is functionalised with one or more functional groups selected from the group consisting of silane, alkoxysilane, aminosilane, silane-containing carboxyl, and silanol groups, preferably one or more silane-containing carboxyl groups.

13. The rubber composition according to any one of the preceding claims, wherein the first SBR is functionalised with one or more silane-containing carboxyl groups having the Formula (I): 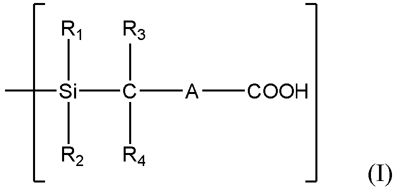 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkylene radical; one or more heteroatoms selected from the group consisting of O, NR₇, S and SiR₈R₉; or, an alkylene radical containing one or more heteroatoms, preferably wherein the heteroatoms are one or more selected from the group consisting of O, NR₇, S, and SiR₈R₉..

14. The rubber composition according to any one of the preceding claims, wherein the first SBR is present in an amount of at least 30 phr, preferably from 35 to 80 phr, more preferably from 40 to 70 phr.

15. The rubber composition according to any one of the preceding claims, wherein the rubber composition further comprises a diene elastomer, which is one or more selected from the group consisting of natural rubber, polybutadiene, synthetic polyisoprene, butadiene copolymers, isoprene copolymers and mixtures thereof, preferably a second copolymer of styrene and butadiene (SBR); or, polybutadiene rubber.

16. The rubber composition according to any one of the preceding claims, wherein the second solution-SBR is functionalised with one or more alkoxysilane groups, preferably methoxysilane or ethoxysilane, more preferably ethoxysilane.

17. The rubber composition according to any one of claims 1 to 9 and 12 to 16, wherein the first SBR functionalised with one or more alkoxysilane groups, preferably methoxysilane or ethoxysilane, more preferably ethoxysilane; or, silane-containing carboxyl groups having the Formula (I); and the rubber composition further comprises a polybutadiene rubber; and,
wherein the DCPD resin has one or more of the following features: a T_{g} of from 65°C to 90°C; an aromaticity of less than 5%, preferably 0%; and/or a molecular weight of from 600 to 700 Da, preferably from 625 to 675 Da.

18. The rubber composition according to any one of claims 1 to 7 and 10 to 16, wherein the first SBR is functionalised with one or more alkoxysilane groups, preferably methoxysilane or ethoxysilane, more preferably ethoxysilane; or, silane-containing carboxyl groups having the Formula (I); and the rubber composition further comprises a polybutadiene rubber; and,
wherein the DCPD resin has one or more of the following features: a T_{g} of from 55°C to 90°C; an aromaticity of from 7.5% to 12.5%, preferably 10%; and/or, a molecular weight of from 800 to 900 Da, preferably from 825 to 875 Da.

19. A pneumatic tyre comprising or prepared from the rubber composition according to any one of the claims 1 to 18.

20. Use of the rubber composition according to any one of claims 1 to 18 in the manufacture of a pneumatic tyre.
